# EUROPÄISCHE PATENTANMELDUNG

(11) **EP 4 810 908 A1**
(43) Veröffentlichungstag der Anmeldung: **23.09.2026**
(21) Anmeldenummer: 26162013.2
(22) Anmeldetag: 03.03.2026
(51) Int. Cl.: G01C 15/00

(54) **ROTATIONSLASER MIT EINEM KONTAKTELEMENT**

(30) Priorität: 20.03.2025 DE 102025110731
(71) Anmelder: Robert Bosch GmbH, 70442 Stuttgart (DE)
(72) Erfinder: Hahl, Markus, 70825 Korntal-Muenchingen (DE); Roehm, Tobias, 72218 Wildberg-Sulz (DE); Sels, Christian, 70567 Stuttgart (DE)

(57) **Zusammenfassung**

Bei einem Rotationslaser mit einem Gehäuse (110), in dem eine gehäusefeste Grundplatte (220) in einem vorgegebenen Abstand zu einer Trägerplatte (260) angeordnet ist, wobei die Trägerplatte (260) eine Laserbaugruppe (200) aufweist, wobei die Laserbaugruppe (200) zumindest eine Lasereinheit (130) zur Erzeugung eines Laserstrahls und eine Nivelliereinheit (180) mit mindestens einer Neigungseinstelleinheit (182) zum Einstellen eines Neigungswinkels (423) der Trägerplatte (260) relativ zur gehäusefesten Grundplatte (220) aufweist, und wobei eine Endanschlageinheit (299) mit mindestens einem Kontaktelement (250) vorgesehen ist, das dazu ausgebildet ist, die Neigungseinstelleinheit (182) bei Erreichen eines maximal möglichen Neigungswinkels (423) zu deaktivieren, ist das mindestens eine Kontaktelement (250) elektrisch leitend.

## Beschreibung

### Stand der Technik

Die vorliegende Erfindung betrifft einen Rotationslaser mit einem Gehäuse, in dem eine gehäusefeste Grundplatte in einem vorgegebenen Abstand zu einer Trägerplatte angeordnet ist, wobei die Trägerplatte eine Laserbaugruppe aufweist, wobei die Laserbaugruppe zumindest eine Lasereinheit zur Erzeugung eines Laserstrahls und eine Nivelliereinheit mit mindestens einer Neigungseinstelleinheit zum Einstellen eines Neigungswinkels der Trägerplatte relativ zur gehäusefesten Grundplatte aufweist, und wobei eine Endanschlageinheit mit mindestens einem Kontaktelement vorgesehen ist, das dazu ausgebildet ist, die Neigungseinstelleinheit bei Erreichen eines maximal möglichen Neigungswinkels zu deaktivieren.

Aus dem Stand der Technik ist ein derartiger Rotationslaser mit einem Gehäuse bekannt, in dem eine gehäusefeste Grundplatte in einem vorgegebenen Abstand zu einer Trägerplatte angeordnet ist. Die Trägerplatte weist eine Laserbaugruppe auf, wobei die Laserbaugruppe zumindest eine Lasereinheit zur Erzeugung eines Laserstrahls und eine Nivelliereinheit mit mindestens einer Neigungseinstelleinheit zum Einstellen eines Neigungswinkels der Trägerplatte relativ zur gehäusefesten Grundplatte aufweist. Des Weiteren ist eine Endanschlageinheit mit mindestens einem Kontaktelement vorgesehen, das dazu ausgebildet ist, die Neigungseinstelleinheit bei Erreichen eines maximal möglichen Neigungswinkels zu deaktivieren.

### Offenbarung der Erfindung

Die Erfindung betrifft einen Rotationslaser mit einem Gehäuse, in dem eine gehäusefeste Grundplatte in einem vorgegebenen Abstand zu einer Trägerplatte angeordnet ist, wobei die Trägerplatte eine Laserbaugruppe aufweist, und wobei die Laserbaugruppe zumindest eine Lasereinheit zur Erzeugung eines Laserstrahls und eine Nivelliereinheit mit mindestens einer Neigungseinstelleinheit zum Einstellen eines Neigungswinkels der Trägerplatte relativ zur gehäusefesten Grundplatte aufweist. Eine Endanschlageinheit mit mindestens einem Kontaktelement ist vorgesehen, das dazu ausgebildet ist, die Neigungseinstelleinheit bei Erreichen eines maximal möglichen Neigungswinkels zu deaktivieren. Das mindestens eine Kontaktelement ist elektrisch leitend.

Die Erfindung ermöglicht somit die Bereitstellung eines Rotationslasers, bei dem durch das mindestens eine elektrisch leitende Kontaktelement einfach und unkompliziert bei einem Erreichen eines maximal möglichen Neigungswinkels ein Deaktivieren der Neigungseinstelleinheit ermöglicht werden kann.

Vorzugsweise ist bei einem Überlastfall zum Schutz der Laserbaugruppe das mindestens eine Kontaktelement elastisch verformbar.

Somit kann leicht und unkompliziert ein Zerstören der Laserbaugruppe aufgrund einer Überbelastung verhindert werden.

Bevorzugt weist ein der Trägerplatte zugeordnetes Gehäuse an seiner Oberseite eine dem mindestens einen Kontaktelement zugeordnete Ausnehmung auf zum teilweisen Durchdringen und Berühren einer einer Steuerplatine zugeordneten Kontaktfläche, wodurch ein der mindestens einen Neigungseinstelleinheit zugeordneter Motor deaktivierbar ist.

Somit kann auf einfache Art und Weise eine Kontaktierung zum Deaktivieren der Neigungseinstelleinheit ermöglicht werden.

Vorzugsweise ist die Kontaktfläche als Mäanderkontakt ausgebildet.

Somit kann einfach und unkompliziert eine geeignete Kontaktfläche bereitgestellt werden.

Bevorzugt ist das mindestens eine Kontaktelement verformbar und zumindest abschnittsweise elektrisch leitend.

Somit kann einfach und leicht ein geeignetes Kontaktelement bereitgestellt werden.

Vorzugsweise weist das mindestens eine Kontaktelement einen quaderförmigen Grundkörper mit abgerundeten Ecken auf und/oder ist entlang seiner Längserstreckung gebogen.

Somit kann auf einfache Art und Weise eine geeignete Ausgestaltung des mindestens einen Kontaktelement ermöglicht werden.

Bevorzugt ist das mindestens eine Kontaktelement in einer zugeordneten Ausnehmung der gehäusefesten Grundplatte eingeklebt. Alternativ ist das mindestens eine Kontaktelement mittels Spritzpress-Verfahren oder Spritzguss-Verfahren an der gehäusefesten Grundplatte angeordnet.

Somit kann eine robuste und stabile Anordnung des mindestens einen Kontaktelements an der gehäusefesten Grundplatte ermöglicht werden.

Das mindestens eine Kontaktelement ist vorzugsweise entlang der gehäusefesten Grundplatte zugeordneten Hauptachsen ausgerichtet.

Somit kann eine einfache und unkomplizierte Anordnung des mindestens einen Kontaktelements ermöglicht werden.

Bevorzugt sind zwei Neigungseinstelleinheiten vorgesehen und vier Kontaktflächen sind vorgesehen, wobei zwei Kontaktflächen auf einer gemeinsamen radialen Achse mit jeweils einer Neigungseinstelleinheit angeordnet sind, wobei die jeweilige Kontaktfläche und die Neigungseinstelleinheit in radialer Richtung zueinander beabstandet angeordnet sind.

Somit kann sicher und zuverlässig ein Zerstören der Laserbaugruppe bei einem Überlastfall verhindert werden.

Vorzugsweise ist ein der mindestens einen Neigungseinstelleinheit zugeordneter Motor derart ausgebildet, dass bei Erreichen eines maximal möglichen Neigungswinkels eine Drehrichtung des zugeordneten Motors zum Verkleinern des Neigungswinkels änderbar ist.

Somit kann alternativ auf einfache Art und Weise ein Zerstören der Laserbaugruppe bei einem Überlastfall verhindert werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine perspektivische Ansicht eines erfindungsgemäßen Rotationslasers,
- Fig. 2: eine perspektivische Ansicht einer dem Rotationslaser von Fig. 1 zugeordneten Laserbaugruppe mit einer Grundplatte,
- Fig. 3: eine perspektivische Ansicht der Laserbaugruppe von Fig. 2,
- Fig. 4: eine Schnittansicht des Rotationslasers von Fig. 1 mit der Laserbaugruppe von Fig. 2 und Fig. 3 in einem ersten Neigungswinkel,
- Fig. 5: eine Schnittansicht des Rotationslasers von Fig. 1 mit der Laserbaugruppe von Fig. 2 und Fig. 3 in einem weiteren Neigungswinkel,
- Fig. 6: eine Explosionsansicht einer Neigungseinstelleinheit des Rotationslasers von Fig. 1 und Fig. 4 und Fig. 5,
- Fig. 7: eine Schnittansicht der Neigungseinstelleinheit von Fig. 6 in einer ersten Position,
- Fig. 8: eine Schnittansicht der Neigungseinstelleinheit von Fig. 6 in einer weiteren Position,
- Fig. 9: eine perspektivische Ansicht eines der Neigungseinstelleinheit von Fig. 6 und Fig. 7 zugeordneten Führungsteils,
- Fig. 10: eine Schnittansicht der Neigungseinstelleinheit von Fig. 6 und Fig. 7 zur Verdeutlichung einer Bajonettverbindung,
- Fig. 11: eine Schnittansicht einer alternativen Neigungseinstelleinheit in einer ersten Position,
- Fig. 12: eine Schnittansicht einer alternativen Neigungseinstelleinheit des Rotationslasers von Fig. 1 und Fig. 4 und Fig. 5, in einer weiteren Position,
- Fig. 13: eine Schnittansicht einer der Neigungseinstelleinheit von Fig. 11 zugeordneten Anordnung eines Motors der Neigungseinstelleinheit,
- Fig. 14: eine Explosionsansicht einer weiteren Neigungseinstelleinheit des Rotationslasers von Fig. 1 und Fig. 4 und Fig. 5,
- Fig. 15: eine Schnittansicht der Neigungseinstelleinheit von Fig. 13 in einer ersten Position,
- Fig. 16: eine Schnittansicht der Neigungseinstelleinheit von Fig. 13 in einer zweiten Position,
- Fig. 17: eine Schnittansicht der Neigungseinstelleinheit von Fig. 13 in einer weiteren Position,
- Fig. 18: eine perspektivische Ansicht der Grundplatte von Fig. 2,
- Fig. 19: eine Draufsicht auf die Laserbaugruppe von Fig. 2 und Fig. 3,
- Fig. 20: eine Schnittansicht der Laserbaugruppe von Fig. 2, Fig. 3, Fig. 19 mit der Grundplatte von Fig. 2 und Fig. 18, und
- Fig. 21: eine perspektivische Ansicht eines Kontaktelements der Laserbaugruppe von Fig. 2, Fig. 3, Fig. 19 und Fig. 20.

### Beschreibung der Ausführungsbeispiele

In den Figuren werden Elemente mit gleicher oder vergleichbarer Funktion mit identischen Bezugszeichen versehen und nur einmal genauer beschrieben.

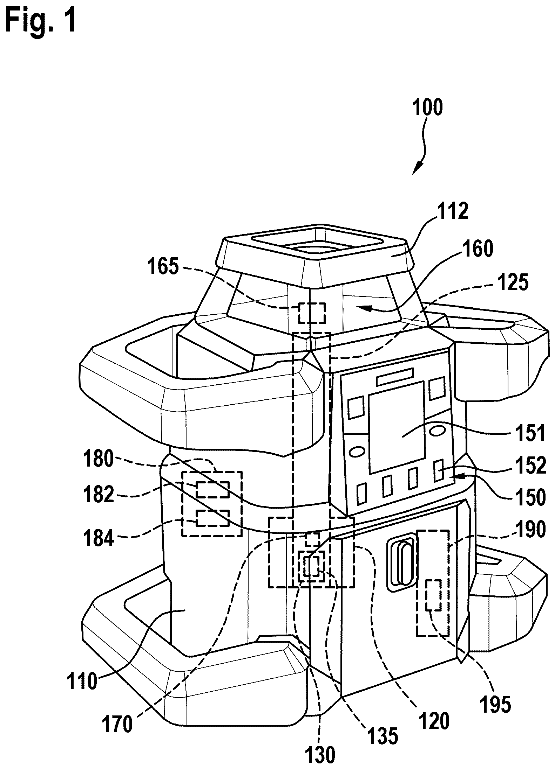

Fig. 1 zeigt einen beispielhaften Rotationslaser 100 mit einem Gehäuse 110, in dem eine Lasereinheit 130 mit einer Laserdiode 135 zur Erzeugung eines Laserstrahls angeordnet ist. Unter einem "Rotationslaser" kann im Kontext der vorliegenden Erfindung auch ein Baulaser oder ein Nivellierlaser verstanden werden. Des Weiteren ist in dem Gehäuse 110 beispielhaft eine Antriebseinheit 120 zum rotierenden Antrieb einer Spindel 125 angeordnet. Vorzugsweise ist die Antriebseinheit 120 als Elektromotor ausgebildet.

Die Lasereinheit 130 ist illustrativ derart an der Spindel 125 angeordnet, dass durch eine Rotation der Spindel 125 der von der Lasereinheit 130 erzeugte Laserstrahl in einer zugeordneten Ebene rotiert. Hierzu ist der Spindel 125 vorzugsweise ein Rotationskopf 160 mit einem Strahlenumleiter 165 zugeordnet. Der Strahlenumleiter 165 ist bevorzugt dazu ausgebildet, den Laserstrahl umzulenken, wodurch der Laserstrahl die zugeordnete Ebene projiziert. Je nach Bauart des Rotationslasers 100 kann die projizierte Ebene horizontal, vertikal oder z.B. mit einem definierten Neigungswinkel zur Erdoberfläche verlaufen.

Darüber hinaus ist in dem Gehäuse 110 bevorzugt eine Elektronikeinheit 190 mit einer Regelungs- und Überwachungsvorrichtung 195 angeordnet. Die Regelungs- und Überwachungsvorrichtung 195 ist vorzugsweise zur Regelung einer Laserleistung der Lasereinheit 130 in Abhängigkeit von einer jeweiligen Betriebsart ausgebildet. Hierbei wird eine Rotationsgeschwindigkeit der Spindel 125 der Antriebseinheit 120 gesteuert oder geregelt. Hierzu ist der Spindel 125 bevorzugt eine Ermittlungseinheit 170 zugeordnet.

Beispielhaft ist dem Gehäuse 110 ein dem Rotationskopf 160 zugeordneter Käfig 112 zum Schutz vor einem Anschlagen des Rotationskopfs 160 zugeordnet.

Der Elektronikeinheit 190 ist illustrativ eine Bedieneinheit 150 mit einem Display 151 und einer Eingabeeinheit 152 zugeordnet. Die Bedieneinheit 150 ist dabei bevorzugt steuer- oder regelungstechnisch mit der Elektronikeinheit 190, insbesondere mit der Regelungs- und Überwachungsvorrichtung 195, verbunden. Die Eingabeeinheit 152 umfasst vorzugsweise zumindest ein Tastenfeld. Alternativ kann die Eingabeeinheit 152 einen Drehregler, einen Touchscreen, einen Schieberegler, eine Fernbedienung oder dergleichen aufweisen. Über die Eingabeeinheit 152 ist durch einen Nutzer z.B. eine Rotationsgeschwindigkeit für die Spindel 125 eingebbar. Alternativ kann die Rotationsgeschwindigkeit der Lasereinheit 130 in zumindest einer Betriebsart automatisch regelbar sein.

Vorzugsweise weist der Rotationslaser 100 zumindest einen Neigungssensor 184 auf, der dazu ausgebildet ist, eine Neigung des Rotationskopfs 160, insbesondere des Strahlenumleiters 165, und/oder der Lasereinheit 130 zu einer vorgegebenen, bevorzugt horizontalen Richtung bzw. zu einem Lot, zu bestimmen. Darüber hinaus weist der Rotationslaser 100 vorzugsweise mindestens eine Neigungseinstelleinheit 182 auf, die dazu ausgebildet ist, den Rotationskopf 160, insbesondere den Strahlenumleiter 165, und/oder die Lasereinheit 130, in Abhängigkeit von einer mittels des zumindest einen Neigungssensors 184 bestimmten Lage, vorzugsweise einer Neigung der Lasereinheit 130 und/oder des Rotationskopfs 160, bevorzugt zum Lot auszurichten. Illustrativ bilden der zumindest eine Neigungssensor 184 und die mindestens eine Neigungseinstelleinheit 182 eine Nivelliereinheit 180.

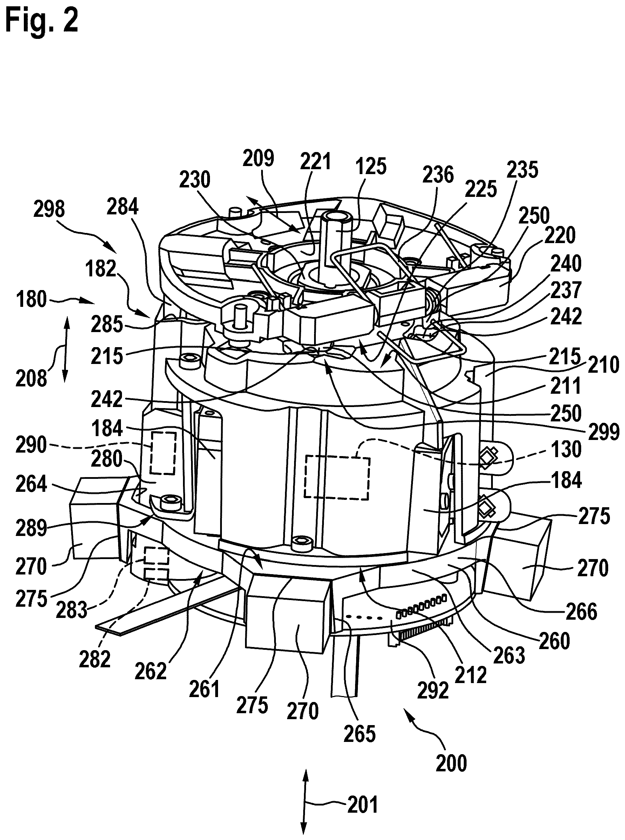

Fig. 2 zeigt die Spindel 125 des Rotationslasers 100 von Fig. 1 mit der Lasereinheit 130 und der Nivelliereinheit 180. Die Spindel 125 ist illustrativ über ein Kugelgelenk 230 in einer Grundplatte 220 gelagert. Vorzugsweise ist die Grundplatte 220 gehäusefest, d.h. am Gehäuse 110 des Rotationslasers 100 von Fig. 1 unbeweglich fixiert. Alternativ ist die Grundplatte 220 einstückig mit dem Gehäuse 110 des Rotationslasers 100 von Fig. 1 ausgebildet. Die Grundplatte 220 weist vorzugsweise eine zentrale Ausnehmung 221 auf, in der zumindest abschnittsweise das Kugelgelenk 230 angeordnet ist.

An einer illustrativ unteren Seite 225 der Grundplatte 220 ist beispielhaft eine Trägerplatte 260 angeordnet. Die Trägerplatte 260 ist bevorzugt in einem vorgegebenen Abstand zur Grundplatte 220 angeordnet. Die Trägerplatte 260 weist vorzugsweise einen scheibenförmigen Grundkörper 266 auf. Des Weiteren weist die Trägerplatte 260 eine der Grundplatte 220 zugewandte Oberseite 261 und eine von der Grundplatte 220 abgewandte Unterseite 262 auf. An der Trägerplatte 260 ist vorzugsweise die Nivelliereinheit 180, die Lasereinheit 130 und/oder eine der Elektronikeinheit 190 von Fig. 1 zugeordnete Steuerplatine 292 angeordnet.

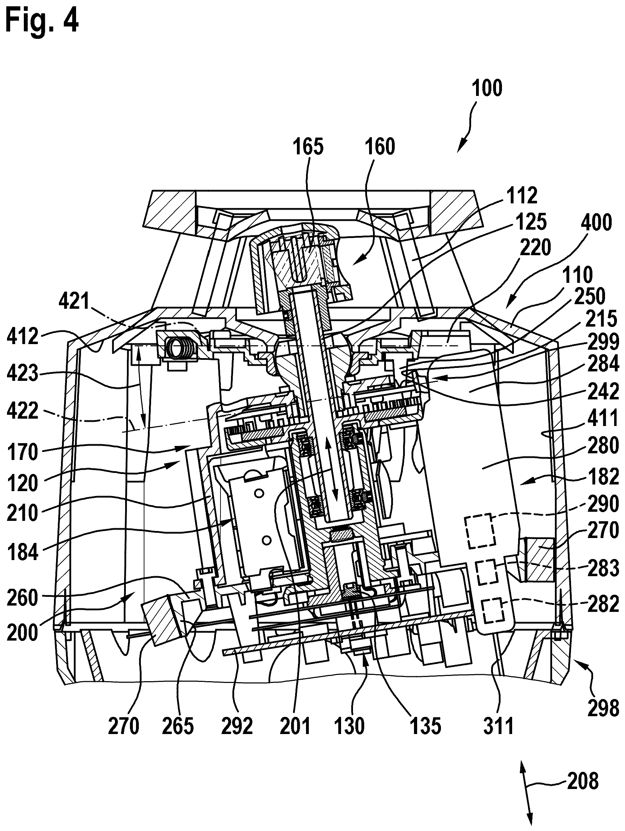

Die mindestens eine der Nivelliereinheit 180 zugeordnete Neigungseinstelleinheit 182 ist vorzugsweise zum Einstellen eines Neigungswinkels (423 in Fig. 4) der Trägerplatte 260 relativ zur gehäusefesten Grundplatte 220 ausgebildet. Dabei ist die mindestens eine Neigungseinstelleinheit 182 abschnittsweise in einer Ausnehmung 264 der Trägerplatte 260 angeordnet. Des Weiteren ist die mindestens eine Neigungseinstelleinheit 182 illustrativ mittels einer Schraubverbindung 289 an der Trägerplatte 260, insbesondere auf der der Grundplatte 220 zugewandten Oberseite 261 der Trägerplatte 260, fixiert.

Der mindestens einen Neigungseinstelleinheit 182 ist bevorzugt ein Schutzelement 290 zum Schutz in einem Überlastfall zugeordnet. Ein Überlastfall umfasst im Kontext der vorliegenden Erfindung mindestens ein ungewolltes Umfallen bzw. Herunterfallen des Rotationslasers 100 auf einen Untergrund, bei dem die Trägerplatte 260 unkontrolliert verschwenkt.

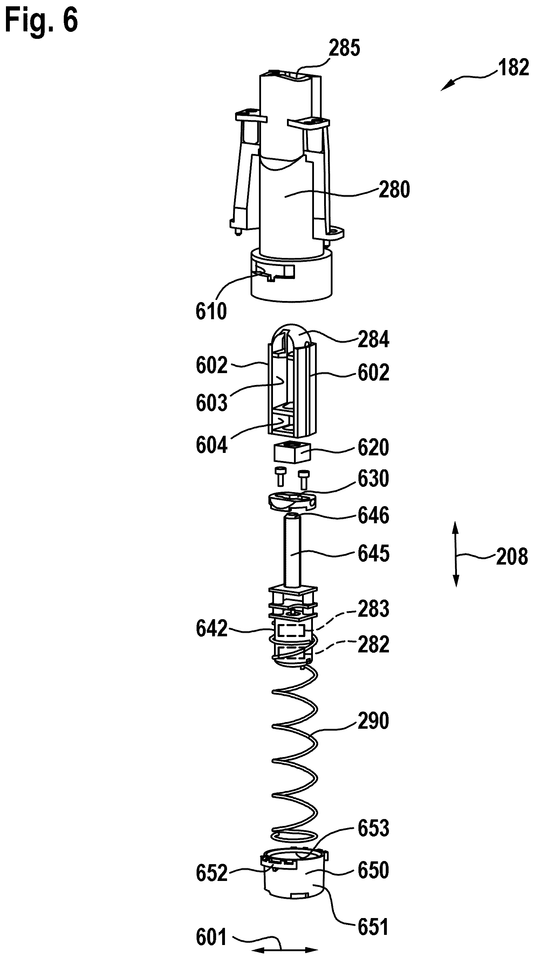

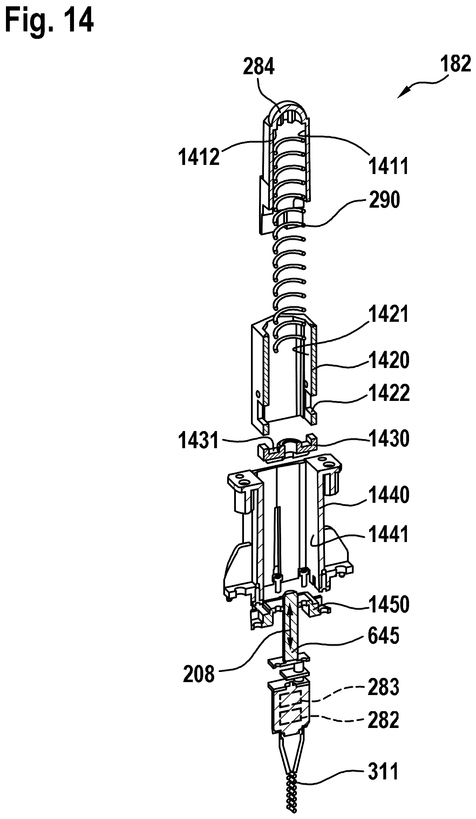

Die mindestens eine Neigungseinstelleinheit 182 weist vorzugsweise ein Neigungseinstelleinheiten-Gehäuse 280 (und 1440 in Fig. 14) auf. In dem Neigungseinstelleinheiten-Gehäuse 280 ist vorzugsweise zumindest ein Motor 282 mit einer Antriebsspindel (645 in Fig. 6) zum Verschieben eines Stößels 284 entlang einer Längserstreckung 208 der Antriebsspindel (645 in Fig. 6), bzw. entlang einer Längserstreckung 201 der Spindel 125, angeordnet. Bevorzugt ist der Motor 282 ein Gleichstrommotor. Der Stößel 284 steht dabei bevorzugt an der gehäusefesten Grundplatte 220 an. Durch ein Verschieben des Stößels 284 entlang der Längserstreckung 208 ist vorzugsweise ein vorgegebener Neigungswinkel (423 in Fig. 4) der Trägerplatte 260 relativ zur gehäusefesten Grundplatte 220 einstellbar. Hierbei ist der Stößel 284 bevorzugt in einer Innenaufnahme 285 des Neigungseinstelleinheiten-Gehäuses 280 verschiebbar angeordnet. Alternativ oder optional ist der Neigungseinstelleinheit 182 ein Getriebe 283 zugeordnet.

Vorzugsweise ist das Schutzelement 290 innerhalb des Neigungseinstelleinheiten-Gehäuses 280 (und 1440 in Fig. 14) der Neigungseinstelleinheit 182 angeordnet. Bevorzugt ist das Schutzelement 290 als Federelement ausgebildet. Das Schutzelement 290 ist vorzugsweise antriebsseitig und/oder abtriebsseitig am Motor 282 angeordnet.

Bevorzugt weist die Trägerplatte 260 eine Laserbaugruppe 200 auf. Die Laserbaugruppe 200 weist vorzugsweise zumindest die Lasereinheit 130, die Antriebseinheit 120 des Rotationslasers 100 von Fig. 1, die Nivelliereinheit 180 und/oder eine der Elektronikeinheit 190 von Fig. 1 zugeordnete Steuerplatine 292 auf. Die Laserbaugruppe 200 ist illustrativ zumindest abschnittsweise auf der Trägerplatte 260 angeordnet. Darüber hinaus weist die Trägerplatte 260 optional ein Gehäuse 210 auf. Das Gehäuse 210 ist beispielhaft mit seiner der Trägerplatte 260 zugewandten Unterseite 212 auf der der Grundplatte 220 zugewandten Oberseite 261 der Trägerplatte 260 angeordnet. Vorzugsweise ist das Gehäuse 210 mittels einer Schraubverbindung an der Trägerplatte 260 befestigt. In dem Gehäuse 210 sind illustrativ zumindest der mindestens eine Neigungssensor 184 der Nivelliereinheit 180 und/oder die Antriebseinheit 120 angeordnet.

Vorzugsweise ist ein Beaufschlagungselement 235 vorgesehen, das bevorzugt gegenüberliegend von der mindestens einen Neigungseinstelleinheit 182 angeordnet ist. Das Beaufschlagungselement 235 ist vorzugsweise dazu ausgebildet, die Trägerplatte 260 nach einem Verschieben des Stößels 284 in eine Ausgangsposition zurück zu beaufschlagen. Bevorzugt ist das Beaufschlagungselement 235 als Federelement, insbesondere als Doppelschenkelfeder mit einem ersten und zweiten Schenkel 236, 237, ausgebildet. Illustrativ ist der zweite Schenkel 237 an der Oberseite 211 des der Trägerpatte 260 zugeordneten Gehäuses 210 angeordnet.

Bevorzugt ist eine Endanschlageinheit 299 mit mindestens einem Kontaktelement 250 vorgesehen. Die Endanschlageinheit 299 ist vorzugsweise dazu ausgebildet, die Neigungseinstelleinheit 182 bei Erreichen eines maximal möglichen Neigungswinkels (423 in Fig. 4) zu deaktivieren. Das mindestens eine Kontaktelement 250 ist bevorzugt elektrisch leitend. Vorzugsweise ist bei einem Überlastfall zum Schutz einer Laserbaugruppe 200 das mindestens eine Kontaktelement 250 elastisch verformbar. Bevorzugt ist das mindestens eine Kontaktelement 250 sowohl verformbar, als auch zumindest abschnittsweise elektrisch leitend. Vorzugsweise ist das mindestens eine Kontaktelement 250 mittels eines Spritzpress-Verfahrens oder eines Spritzguss-Verfahrens an der gehäusefesten Grundplatte 220 angeordnet. Alternativ kann das mindestens eine Kontaktelement 250 an die Grundplatte 220 angeklebt sein.

Bevorzugt ist in dem Gehäuse 210 zumindest abschnittsweise die Lasereinheit 130, die Spindel 125, der mindestens eine Neigungssensor 184 und/oder die mindestens eine Neigungseinstelleinheit 182 angeordnet. Das Gehäuse 210 weist an seiner der Grundplatte 220 zugewandten Oberseite 211 illustrativ eine dem mindestens einen Kontaktelement 250 zugeordnete Ausnehmung 215 auf. Die mindestens eine Ausnehmung 215 ist beispielhaft zum teilweisen Durchdringen und Berühren einer einer Steuerplatine 240 zugeordneten Kontaktfläche 242 ausgebildet. Vorzugsweise ist zumindest eine, d. h. die Kontaktfläche 242, vorgesehen, wobei die Kontaktfläche 242 ringförmig ausgebildet sein kann. Alternativ können mehrere Kontaktflächen vorgesehen sein, die als Ringsegment ausgebildet sein können. Alternativ sind einem Kontaktelement 250 mehrere Kontaktflächen zugeordnet und/oder einer Kontaktfläche sind mehrere Kontaktelemente 250 zugeordnet.

Durch das Berühren der Kontaktfläche 242 der Steuerplatine 240 mittels des Kontaktelements 250 ist der Motor 282 der Neigungseinstelleinheit 182 bevorzugt deaktivierbar. Vorzugsweise sind die Kontaktfläche 242 und die Neigungseinstelleinheit 182 in radialer Richtung 209 der Spindel 125 zueinander beabstandet angeordnet. Alternativ oder optional ist der Motor 282 der mindestens einen Neigungseinstelleinheit 182 derart ausgebildet, dass bei Erreichen eines maximal möglichen Neigungswinkels (423 in Fig. 4) eine Drehrichtung des Motors 282 zum Verkleinern des Neigungswinkels (423 in Fig. 4) änderbar ist.

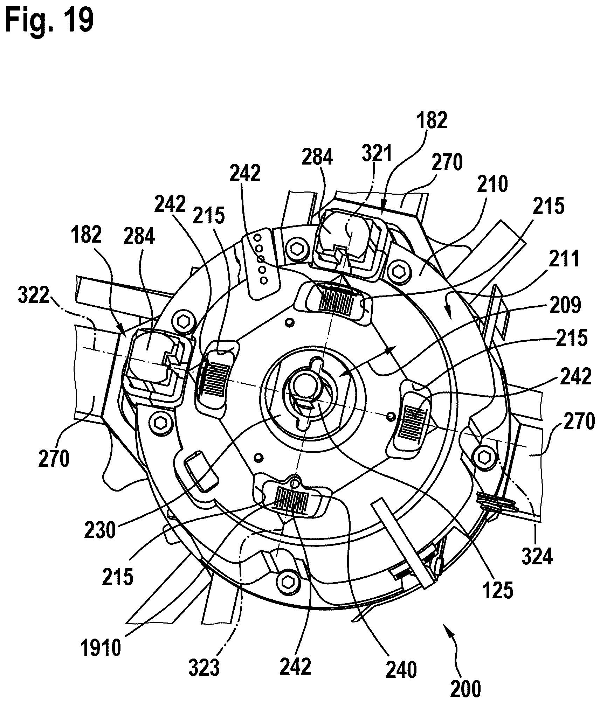

Die Steuerplatine 240 ist illustrativ der Elektronikeinheit 190 von Fig. 1 zugeordnet. Insbesondere ist die Steuerplatine 240 beispielhaft der Antriebseinheit 120 von Fig. 1 zugeordnet. Vorzugsweise ist die Steuerplatine 240 an einer von der Grundplatte 220 abgewandten, illustrativ der Grundplatte 220 zugewandten Oberseite 261 der Trägerplatte 260 angeordnet. Bevorzugt ist die Kontaktfläche 242 als Mäanderkontakt (1910 in Fig. 19) ausgebildet.

Vorzugsweise ist eine Überlastschutzvorrichtung 298 zum Schutz der Laserbaugruppe 200 bei einem Überlastfall vorgesehen. Bevorzugt ist an einem Außenumfang 263 der Trägerplatte 260 mindestens ein dämpfendes Schutzelement 270 angeordnet, das der Überlastschutzvorrichtung 298 zugeordnet ist. Das mindestens eine dämpfende Schutzelement 270 ist vorzugsweise zumindest abschnittsweise am Außenumfang 263 der Trägerplatte 260 angeordnet. Hierbei ist das mindestens eine dämpfende Schutzelement 270 illustrativ als Erweiterung der Trägerplatte 260 in radialer Richtung 209 ausgebildet. Alternativ ist entlang des gesamten Außenumfangs 263 der Trägerplatte 260 ein dämpfendes Schutzelement 270 angeordnet. Das mindestens eine dämpfende Schutzelement 270 weist vorzugsweise Dämpfungsschaum auf.

Bevorzugt weist die Trägerplatte 260 an ihrem Außenumfang zumindest einen Befestigungsabschnitt 265 auf, der die Trägerplatte 260 entlang der Längserstreckung der Spindel 125 erweitert. Illustrativ ist die Trägerplatte 260 in Richtung der Steuerplatine 292 erweitert. Vorzugsweise ist das mindestens eine dämpfende Schutzelement 270 am Befestigungsabschnitt 265 angeordnet, insbesondere befestigt.

Illustrativ sind drei dämpfende Schutzelemente 270 am Außenumfang 263 der Trägerplatte 260 angeordnet. Beispielhaft sind die drei dämpfenden Schutzelemente 270 quaderförmig ausgebildet. Es wird darauf hingewiesen, dass die illustrativ drei dämpfenden Schutzelemente 270 auch jeweils eine beliebig andere Form aufweisen können, z.B. die eines Ellipsoids.

Vorzugsweise ist dem mindestens einen dämpfenden Schutzelement 270 ein Klebemittel 275 zur Ausbildung einer Klebverbindung mit der Trägerplatte 260 und/oder dem Gehäuse 110 zugeordnet. Alternativ oder optional ist das Schutzelement 290 der Überlastschutzvorrichtung 298 zugeordnet. Des Weiteren ist alternativ oder optional das Kontaktelement 250 der Überlastschutzvorrichtung 298 zugeordnet.

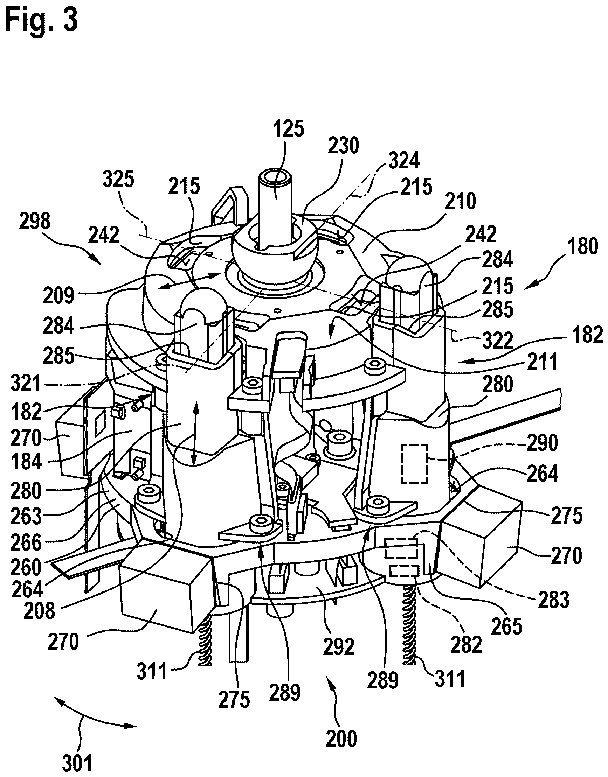

Fig. 3 zeigt die Trägerplatte 260 mit der Laserbaugruppe 200 und dem Gehäuse 210 von Fig. 2, die entlang einer Umfangsrichtung 301 der Trägerplatte 260 im Vergleich zu Fig. 2 verdreht angeordnet ist. Dabei verdeutlicht Fig. 2 zwei der Laserbaugruppe 200 zugeordnete Neigungseinstelleinheiten 182. Die beiden Neigungseinstelleinheiten 182 sind vorzugsweise zumindest im Wesentlichen identisch ausgebildet. Hierbei ist jeder Neigungseinstelleinheit 182 illustrativ ein Stromkabel 311 zugeordnet.

Des Weiteren sind in Fig. 3 beispielhaft vier Kontaktflächen 242 vorgesehen. Hierbei sind vorzugsweise jeweils zwei Kontaktflächen 242 auf einer gemeinsamen radialen Achse 321, 322 angeordnet. Bevorzugt sind ebenfalls auf jeder radialen Achse 321, 322 jeweils eine Neigungseinstelleinheit 182 angeordnet. Hierbei sind die jeweilige Kontaktfläche 242 und die Neigungseinstellseinheit 182 vorzugsweise in radialer Richtung 209 voneinander beabstandet angeordnet. Insbesondere ist die jeweilige Kontaktfläche 242 in radialer Richtung 209 illustrativ zwischen der Spindel 125 und der Neigungseinstelleinheit 182 angeordnet. Bevorzugt sind die beiden radialen Achsen 321, 322 benachbart zueinander angeordnet. Illustrativ sind die beiden Achsen 321, 322 in einem Abstand von 90° zueinander angeordnet. Vorzugsweise ist diametral gegenüberliegend zur radialen Achse 321 eine radiale Achse 324 angeordnet und/oder diametral gegenüberliegend zur radialen Achse 322 ist eine radiale Achse 325 angeordnet. Bevorzugt ist jeder der radialen Achsen 324, 325 jeweils eine Kontaktfläche 242 zugeordnet.

Fig. 4 zeigt den Rotationslaser 100 von Fig. 1 mit dem Gehäuse 110, das illustrativ eine Innenaufnahme 412 aufweist, in der die Grundplatte 220 und die Trägerplatte 260 mit der Lasereinheit 200 angeordnet sind. Fig. 4 verdeutlicht dabei eine Endanschlag-Position 400 der Laserbaugruppe 200. Durch ein Verschieben des Stößels 284 der Neigungseinstelleinheit 182 entlang der Längserstreckung 208 der Antriebsspindel (645 in Fig. 6), bzw. entlang einer Längserstreckung 201 der Spindel 125, ist ein vorgegebener Neigungswinkel 423 der Trägerplatte 260 relativ zur gehäusefesten Grundplatte 220 einstellbar. Illustrativ ist der Neigungswinkel 423 zwischen einer der Grundplatte 220 zugeordneten Achse 421 und einer der Trägerplatte 260 zugeordneten Achse 422 ausgebildet bzw. eingestellt.

Alternativ oder optional ist an einem der Innenaufnahme 412 zugeordneten Innenumfang 411 des Gehäuses 110 des Rotationslasers 100 das mindestens eine dämpfende Schutzelement 270 von Fig. 2 angeordnet. Hierbei ist das dämpfende Schutzelement 270 in Umfangsrichtung beispielhaft komplett am Innenumfang 411 ausgebildet oder zumindest abschnittsweise am Innenumfang 411 ausgebildet. Das dämpfende Schutzelement 270 ist, wie oben beschrieben, der Überlastschutzvorrichtung 298 von Fig. 2 zugeordnet. In der in Fig. 4 gezeigten Endanschlag-Position 400 liegt das an der Trägerplatte 260 angeordnete dämpfende Schutzelement 270 bevorzugt am Innenumfang 411 des Gehäuses 110 an und/oder das am Innenumfang 411 des Gehäuses 110 angeordnete dämpfende Schutzelement 270 liegt am Außenumfang 263 der Trägerplatte 260 an.

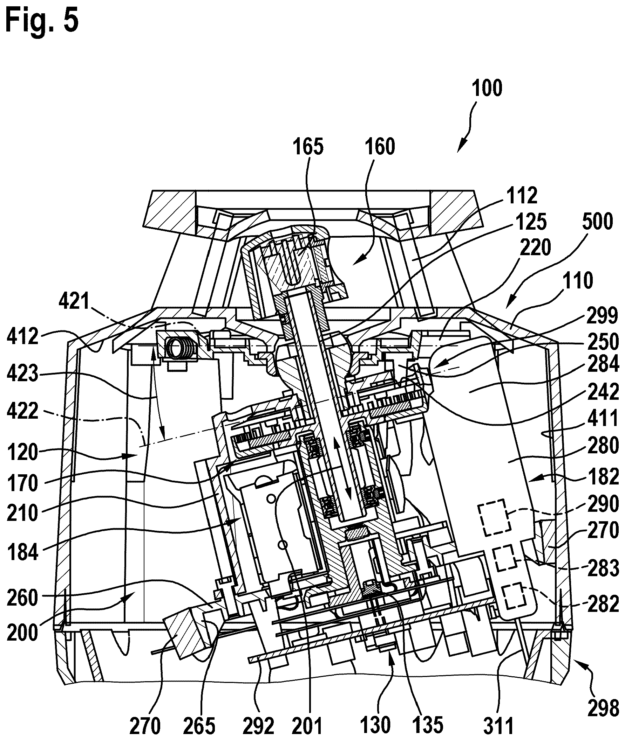

Fig. 5 zeigt den Rotationslaser 100 von Fig. 1 mit der Grundplatte 220, sowie die Trägerplatte 260 mit der Lasereinheit 130 von Fig. 4 und verdeutlicht eine Überlast-Position 500 der Laserbaugruppe 200, bei der der Rotationslaser 100 beispielhaft auf seine illustrativ rechte Seite fällt. Hierbei wird das illustrativ rechte, an der Trägerplatte 260 angeordnete, dämpfende Schutzelement 270 komprimiert, wodurch ein Anschlagen der Trägerplatte 260 am Gehäuse 110 verhindert wird und somit eine Zerstörung bzw. Beschädigung der Laserbaugruppe 200 verhindert werden kann. Insbesondere wird dabei eine Zerstörung der Steuerplatine 292, der Neigungseinstelleinheit 182, der Antriebseinheit 120 und/oder der Lasereinheit 130 verhindert.

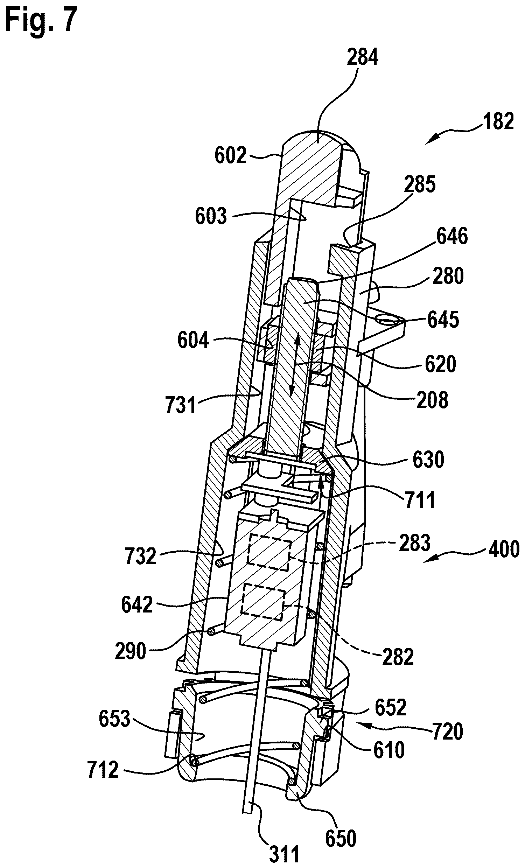

Fig. 6 zeigt die Neigungseinstelleinheit 182 von Fig. 1 bis Fig. 5 mit dem Neigungseinstelleinheiten-Gehäuse 280, dem Stößel 284, dem Motor 282, dem Getriebe 283 und dem Schutzelement 290. Das Getriebe 283 ist vorzugsweise ein Stirnradgetriebe. Wie oben beschrieben, weist das Neigungseinstelleinheiten-Gehäuse 280 eine Innenaufnahme 285 auf, in der der Stößel 284 verschiebbar angeordnet ist. An einem illustrativ unteren Bereich weist das Neigungseinstelleinheiten-Gehäuse 280 illustrativ eine Ausnehmung 610 auf. Dem illustrativ unteren Bereich ist eine Kappe 650 zugeordnet, die das Neigungseinstelleinheiten-Gehäuse 280 illustrativ unten verschließt. Die Kappe 650 weist beispielhaft eine Innenaufnahme 653 auf sowie einen Außenumfang 651, an dem illustrativ zumindest ein Erweiterungsteil 652 angeordnet ist. Das Erweiterungsteil 652 erweitert die Kappe 650 beispielhaft in radialer Richtung 601. Vorzugsweise bildet die Kappe 650, insbesondere das Erweiterungsteil 652, mit der Ausnehmung 610 des Neigungseinstelleinheiten-Gehäuses 280 eine Bajonettverbindung (720 in Fig. 7) aus.

Des Weiteren verdeutlicht Fig. 6 eine Antriebsspindel 645 des Motors 282 der Neigungseinstelleinheit 182. Vorzugsweise weist die Antriebsspindel 645 abschnittsweise ein Außengewinde auf. Bevorzugt ist das Außengewinde der Antriebsspindel 645 ein Feingewinde. An ihrem vom Motor 282 abgewandten Ende weist die Antriebsspindel 645 beispielhaft eine Abstufung 646 auf.

Der Stößel 284 weist bevorzugt eine erste, illustrativ obere Aufnahme 603 und eine zweite, illustrativ untere Aufnahme 604 auf. Des Weiteren weist der Stößel 284 vorzugsweise zwei seitliche Führungsflächen 602 auf.

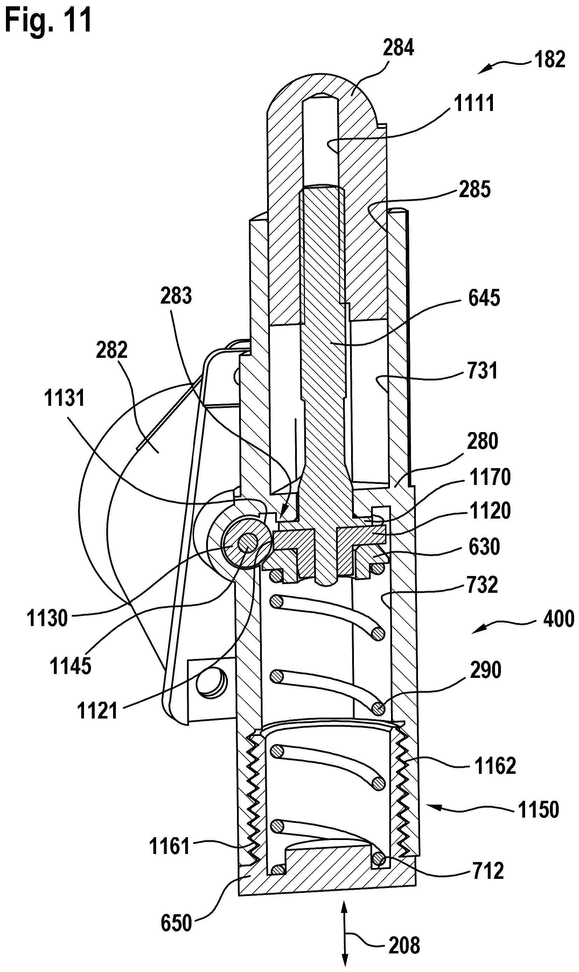

Vorzugsweise ist der Stößel 284 mittels einer Schraubverbindung mit der Antriebsspindel 645 wirkverbunden. Dem Stößel 284 ist dabei bevorzugt ein Gewindeeinsatz 620 (und 1430 in Fig. 14) oder ein Innengewinde (1111 in Fig. 11) zugeordnet. Im Überlastfall ist die Antriebsspindel 645 bevorzugt vom Gewindeeinsatz 620 oder dem Innengewinde (1111 in Fig. 11) getrennt. Hierbei entkoppelt die Abstufung 645 die Antriebsspindel 645 im Überlastfall vom Gewindeeinsatz 620 oder dem Innengewinde (1111 in Fig. 11). Vorzugsweise weist die Abstufung 645 kein Gewinde auf. Die Abstufung 646 der Antriebsspindel 645 dient, wenn die Antriebsspindel 645 den Gewindeeinsatz 620 verlässt, vorzugsweise dazu, dass die Antriebsspindel 645 bei einem Zurückdrehen wieder in den Gewindeeinsatz 620 gedreht werden kann.

Vorzugsweise ist der illustrativ unteren Aufnahme 604 der Gewindeeinsatz 620 zugeordnet. Bevorzugt weist der Gewindeeinsatz 620 einen quaderförmigen Grundkörper auf. Des Weiteren ist der Antriebsspindel 645 beispielhaft ein Führungsteil 630 zum Führen im Neigungseinstelleinheiten-Gehäuse 280 zugeordnet. Das Führungsteil 630 lagert vorzugsweise den Motor 282.

Bevorzugt ist das als Federelement ausgebildete Schutzelement 290 koaxial zur Antriebsspindel 645 angeordnet. Vorzugsweise ist das Schutzelement 290 koaxial zur Längserstreckung 208 der Antriebsspindel 645 ausgerichtet, bzw. in Längsrichtung der Antriebsspindel 645 ausgerichtet. Illustrativ ist das Schutzelement 290 an einem Außenumfang 642 des Motors 282 angeordnet. Der Motor 282 ist vorzugsweise entlang einer Längserstreckung 208 der Antriebsspindel 645 angeordnet.

Fig. 7 zeigt die Neigungseinstelleinheit 182 von Fig. 6 in der Endanschlag-Position 400 von Fig. 4. Der Gewindeeinsatz 620 ist illustrativ in der Aufnahme 604 des Neigungseinstelleinheiten-Gehäuses 280 angeordnet. Die Antriebsspindel 645 ist bevorzugt über ihr Gewinde mit dem Gewindeeinsatz 620 wirkverbunden, sodass eine Rotation der Antriebsspindel 645 den Stößel in Längsrichtung 208 der Antriebsspindel 645 in der Innenaufnahme 285 des Neigungseinstelleinheiten-Gehäuses 280 verschiebt. Die Innenaufnahme 285 weist vorzugsweise einen illustrativ oberen Innenraum 731 auf, der sich in einen illustrativ unteren Innenraum 732 aufweitet. Der Stößel 284 ist beispielhaft im illustrativ oberen Innenraum 731 zumindest abschnittsweise angeordnet.

Das Schutzelement 290 ist gemäß Fig. 7 vorzugsweise in dem dem Motor 282 zugeordneten, illustrativ unteren Innenraum 732 des Neigungseinstelleinheiten-Gehäuses 280 der Neigungseinstelleinheit 182 angeordnet. Das Führungsteil 630 ist bevorzugt ebenfalls im illustrativ unteren Innenraum 732 angeordnet. Des Weiteren ist das Schutzelement 290 beispielhaft zwischen einer dem Motor 282 zugewandten Unterseite 711 des Führungsteils 630 und einer der Innenaufnahme 653 der Kappe 650 zugewandten Anstehkante 712 angeordnet.

Des Weiteren verdeutlicht Fig. 7 eine beispielhafte Bajonettverbindung 720 der Kappe 650 mit dem Neigungseinstelleinheiten-Gehäuse 280. Dabei bildet das Erweiterungsteil 652 der Kappe 650 vorzugsweise mit der Ausnehmung 610 des Neigungseinstelleinheiten-Gehäuses 280 die Bajonettverbindung 720 aus.

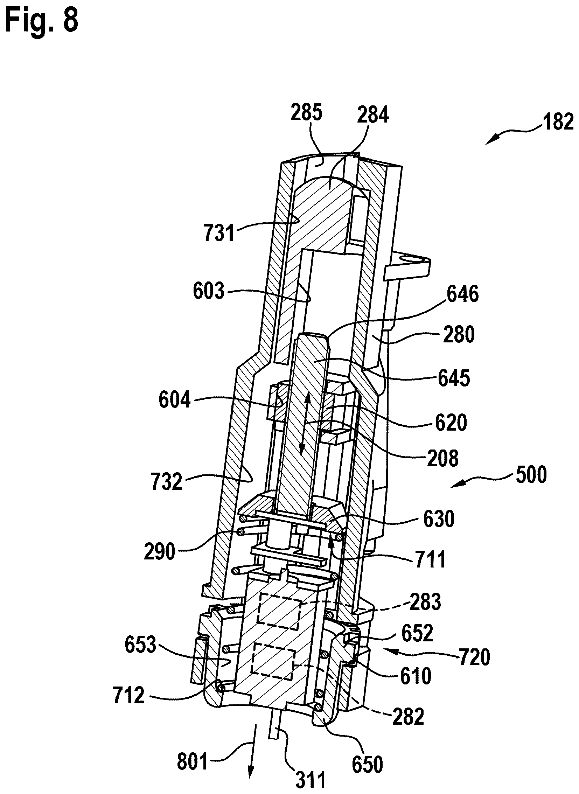

Fig. 8 zeigt die Neigungseinstelleinheit 182 von Fig. 7 in der Überlast-Position 500 von Fig. 5, wobei gemäß Fig. 8 der Überlastfall beispielhaft durch ein Fallen des Rotationslasers 100 von Fig. 1 auf einen Untergrund ausgelöst wird. Hierbei schwingt die Laserbaugruppe 200 nach rechts und der Stößel 284 weicht nach illustrativ unten aus. Dabei wird die gesamte Baugruppe bestehend aus dem Motor 282, der Antriebspindel 645, dem Gewindeeinsatz 620, dem Führungsteil 630 und dem Stößel 284 nach illustrativ unten bzw. entlang eines Pfeils 801 verschoben. Dabei wird der Stößel 284 vorzugsweise in die Innenaufnahme 285 des Neigungseinstelleinheiten-Gehäuses 280 bzw. den illustrativ oberen Innenraum 731, verschoben. Das Schutzelement 290 wird dabei komprimiert. Das Beaufschlagungselement 235 von Fig. 2, bzw. die Doppelschenkelfeder, muss eine kleinere Federrate aufweisen als das Schutzelement 290, damit nach dem Überlastfall die Laserbaugruppe 200 wieder in den Normal- bzw. Gebrauchszustand zurückgeführt wird.

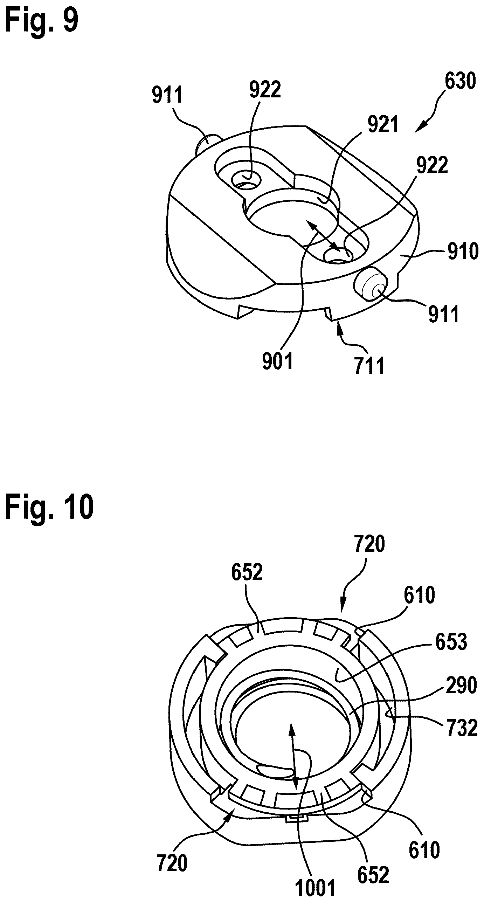

Fig. 9 zeigt das Führungsteil 630 der Neigungseinstelleinheit 182 von Fig. 6 bis Fig. 8. Vorzugsweise weist das Führungsteil 630 einen scheibenförmigen Grundkörper mit einem Außenumfang 910 auf. Das Führungsteil 630 weist vorzugsweise an seinem Außenumfang 910 zumindest einen, illustrativ zwei seitliche radiale Erweiterungen 911 auf. Die radialen Erweiterungen 911 erweitern illustrativ das Führungsteil 630 in radialer Richtung 901. Die radialen Erweiterungen 911 sind bevorzugt dazu ausgebildet, im Überlastfall das Führungsteil 630 in korrespondierenden Nuten des Neigungseinstelleinheiten-Gehäuses 280 zu führen und somit ein Verdrehen des Motors 282 zu verhindern.

Zur Lagerung der Antriebsspindel 645 weist das Führungsteil 630 vorzugsweise eine zentrale Ausnehmung 921 auf. Darüber hinaus weist das Führungsteil 630 bevorzugt zumindest eine, illustrativ zwei seitlich von der Ausnehmung 921 angeordnete Ausnehmungen 922 zur Verbindung mit dem Motor 282 auf. Bevorzugt ist der Motor 282 mittels einer Schraubverbindung mit dem Führungsteil 630 verbunden. Alternativ kann das Führungsteil 630 auch einstückig mit dem Motor 282 ausgebildet sein.

Fig. 10 zeigt die Bajonettverbindung 720 von Fig. 7 der Kappe 650 mit dem Neigungseinstelleinheiten-Gehäuse 280 von Fig. 2. Dabei bildet das Erweiterungsteil 652 der Kappe 650 vorzugsweise mit der Ausnehmung 610 des Neigungseinstelleinheiten-Gehäuses 280 die Bajonettverbindung 720 aus. Wie oben erwähnt, ist das Erweiterungsteil 652 als Erweiterung in radialer Richtung 1001 ausgebildet.

Fig. 11 zeigt die Neigungseinstelleinheit 182 von Fig. 1, die gemäß einer alternativen Ausführungsform ausgebildet ist. Hierbei ist der Motor 282 von Fig. 2 bevorzugt quer, insbesondere senkrecht, zur Längserstreckung 208 der Antriebsspindel 645 von Fig. 6 angeordnet. Der Antriebsspindel 645 ist vorzugsweise ein Zahnrad 1120 zugeordnet. Illustrativ ist das Zahnrad 1120 entlang der Längserstreckung 208 der Antriebsspindel 645 zwischen dem Führungsteil 630 und einem Umfangskragen 1170 der Antriebsspindel 645 angeordnet. Bevorzugt ist dem Motor 282 eine Zwischenwelle 1145 mit einem Zahnrad 1130 zugeordnet. In einem Normalbetrieb 400 des Motors 282, wie in Fig. 11 gezeigt, ist das Zahnrad 1120 der Antriebsspindel 645 vorzugsweise mit dem Zahnrad 1130 des Motors 282 wirkverbunden. Hierzu weist das Zahnrad 1130 illustrativ eine Außenverzahnung 1131 auf und das Zahnrad 1120 weist eine Außenverzahnung 1121 auf.

Darüber hinaus weist der Stößel 284 bevorzugt ein Innengewinde 1111 zur Verbindung mit der Antriebsspindel 645 auf. Des Weiteren weist die Kappe 650 beispielhaft ein Außengewinde 1161 auf und das Neigungseinstelleinheiten-Gehäuse 280 weist vorzugsweise ein Innengewinde 1162 zur Ausbildung einer Schraubverbindung 1150 auf. Alternativ weist das Neigungseinstelleinheiten-Gehäuse 280 ein Außengewinde auf und die Kappe 650 weist ein Innengewinde zur Ausbildung einer Schraubverbindung 1150 auf.

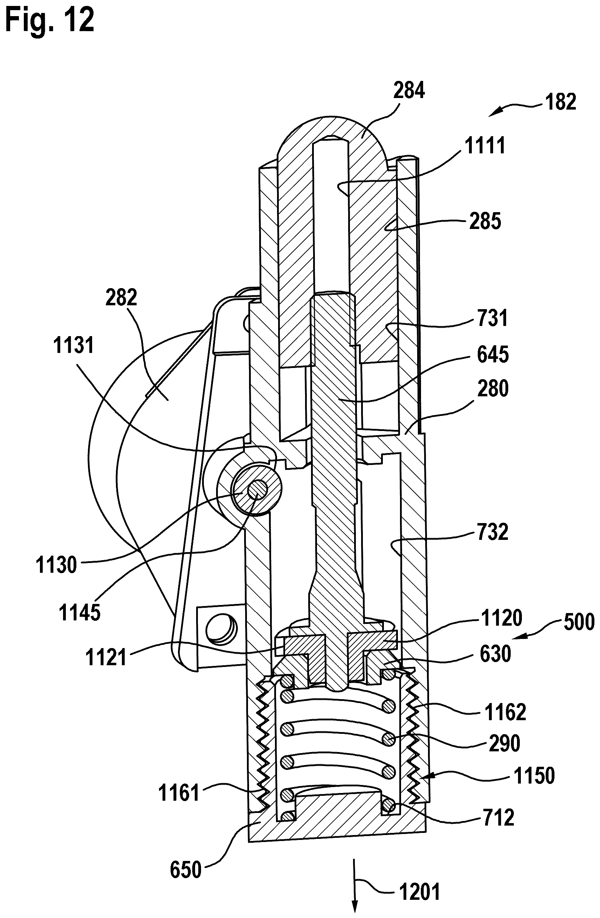

Fig. 12 zeigt die Neigungseinstelleinheit 182 von Fig. 11 im Fehlerfall des Motors 282, bzw. in der Überlast-Position 500 von Fig. 5. Dabei ist das Schutzelement 290 von Fig. 2 illustrativ komprimiert und somit ist das Zahnrad 1120 der Antriebsspindel 645 vom Zahnrad 1130 des Motors 282 getrennt, wodurch eine Übertragung einer Drehbewegung des Motors 282 auf die Antriebsspindel 645 unterbrochen wird. Hierbei werden ebenfalls der Stößel 645, das Gewinde zwischen dem Stößel 284 und der Antriebsspindel 645 sowie die Antriebsspindel 645 geschützt. Bei einem Schlag von illustrativ oben auf den Stößel 284, wie in Fig. 5 zu sehen, können der Stößel 284 und die Antriebsspindel 645 nach illustrativ unten entlang einer Richtung eines Pfeils 1201 gegen das Schutzelement 290 ausweichen.

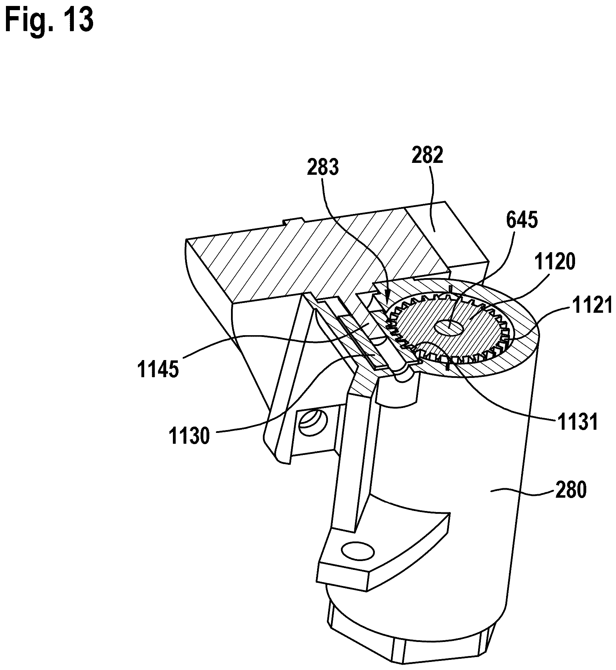

Fig. 13 zeigt das Getriebe 283 der Neigungseinstelleinheit 182 von Fig. 11 und Fig. 12. Dabei verdeutlicht Fig. 13 das der Antriebsspindel 645 zugeordnete Zahnrad 1120, das dem Motor 282 zugeordnete Zahnrad 1130, sowie die Zwischenwelle 1145.

Fig. 14 zeigt die Neigungseinstelleinheit 182 von Fig. 1, die gemäß einer weiteren Ausführungsform ausgebildet ist. Hierbei ist das Schutzelement 290 bevorzugt zumindest abschnittsweise in einem Innenraum 1411 des Stößels 284 von Fig. 2 angeordnet. Der Innenraum 1411 ist illustrativ dem Motor 282 zugewandt angeordnet.

Des Weiteren ist der Stößel 284 illustrativ in einer Innenaufnahme 1421 eines Führungselements 1420 entlang der Längserstreckung 208 der Antriebsspindel 645 bewegbar angeordnet. Das Führungselement 1420 wiederum ist vorzugsweise entlang der Längserstreckung 208 der Antriebsspindel 645 bewegbar in einer Innenaufnahme 1441 eines Neigungseinstelleinheiten-Gehäuses 1440 der Neigungseinstelleinheit 182 angeordnet. Die Antriebsspindel 645 verschiebt vorzugsweise mittels eines Gewindeeinsatzes 1430 den Stößel 284 entlang der Längserstreckung 208 der Antriebsspindel 645. Hierbei ist der Gewindeeinsatz 1430 vorzugsweise mit dem Führungselement 1420 wirkverbunden. Bevorzugt weist das Führungselement 1420 hierzu zumindest eine Ausnehmung 1422 auf.

Das Schutzelement 290 ist vorzugsweise im Innenraum 1411 des Stößels 284 koaxial zur Antriebsspindel 645 angeordnet. Des Weiteren ist das Schutzelement 290 bevorzugt entlang der Längserstreckung 208 der Antriebsspindel 645 zwischen einer dem Motor 282 zugewandten Anstehkante 1412 des Innenraums 1411 des Stößels 284 und einer Bodenfläche 1431 des Gewindeeinsatzes 1430 angeordnet.

Darüber hinaus ist beispielhaft ein Deckel 1450 vorgesehen, der dazu ausgebildet ist, das Neigungseinstelleinheiten-Gehäuse 1440 der Neigungseinstelleinheit 182 an einem dem Stößel 284 gegenüberliegenden Ende zu verschließen. Gemäß Fig. 14 ist der Motor 282 außerhalb des Neigungseinstelleinheiten-Gehäuses 1440 der Neigungseinstelleinheit 182 angeordnet. In Fig. 14 ist der Motor 282 illustrativ unterhalb des Neigungseinstelleinheiten-Gehäuses 1440 angeordnet.

Das Schutzelement 290 kann alternativ oder optional im Bereich zwischen dem Gewindeeinsatzes 1430 und dem Deckel 1450 angeordnet sein.

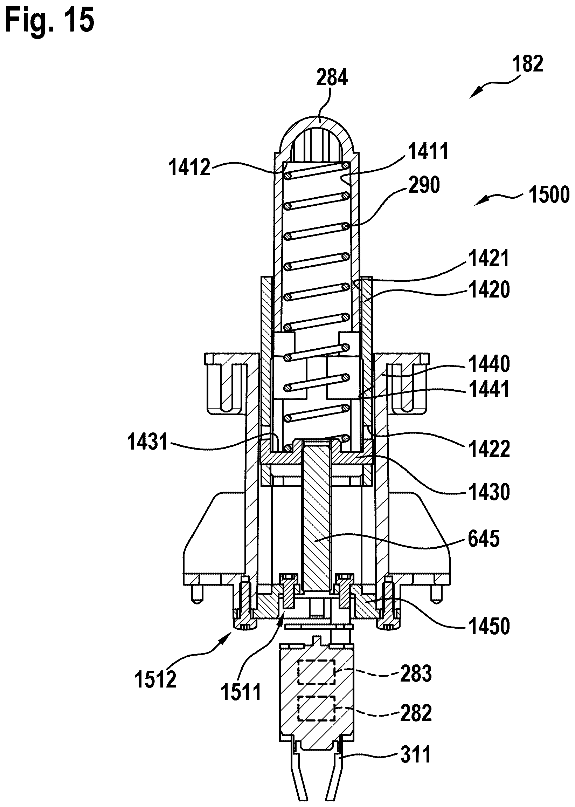

Fig. 15 zeigt die Neigungseinstelleinheit 182 von Fig. 14 in einer ausgefahrenen Position 1500. Das Führungselement 1420 ist dabei illustrativ abschnittsweise außerhalb der Innenaufnahme 1441 des Neigungseinstelleinheiten-Gehäuses 1440 angeordnet und der Stößel 284 ist abschnittsweise außerhalb der Innenaufnahme 1421 des Führungselements 1420 angeordnet.

Des Weiteren zeigt Fig. 15 eine beispielhafte Schraubverbindung 1511 zwischen dem Deckel 1450 und dem Motor 282. Darüber hinaus zeigt Fig. 15 eine beispielhafte Schraubverbindung 1512 zwischen dem Deckel 1450 und dem Neigungseinstelleinheiten-Gehäuse 1440.

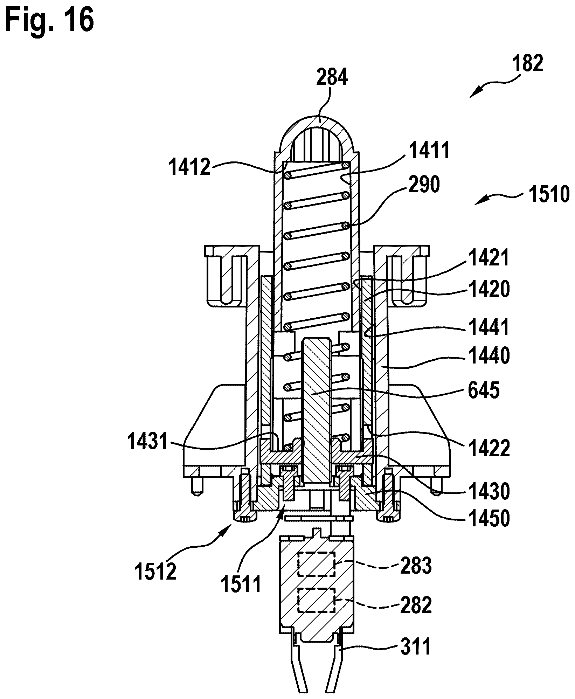

Fig. 16 zeigt die Neigungseinstelleinheit 182 von Fig. 15 in einer eingefahrenen Position 1510. Das Führungselement 1420 ist dabei illustrativ komplett innerhalb der Innenaufnahme 1441 des Neigungseinstelleinheiten-Gehäuses 1440 angeordnet und der Stößel 284 ist abschnittsweise außerhalb der Innenaufnahme 1421 des Führungselements 1420 angeordnet.

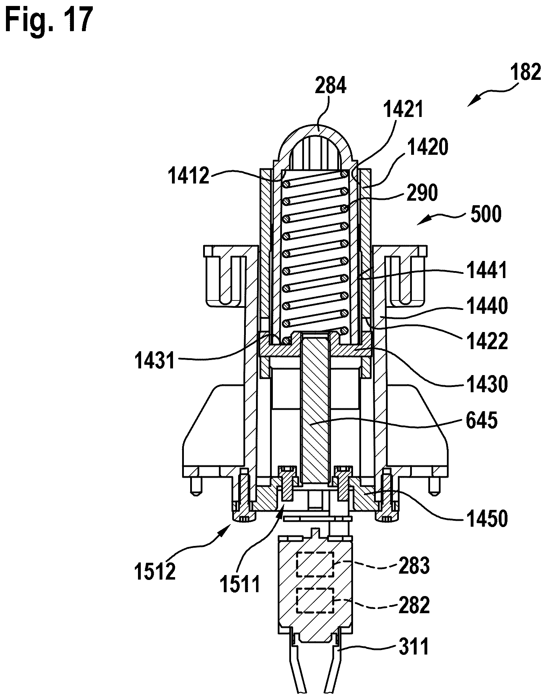

Fig. 17 zeigt die Neigungseinstelleinheit 182 von Fig. 15 und Fig. 16 in der Überlast-Position 500 gem. Fig. 5. Das Führungselement 1420 ist dabei illustrativ abschnittsweise außerhalb der Innenaufnahme 1441 des Neigungseinstelleinheiten-Gehäuses 1440 angeordnet und der Stößel 284 ist soweit wie möglich in der Innenaufnahme 1421 des Führungselements 1420 angeordnet. Hierbei ist das Schutzelement 290 illustrativ komplett komprimiert.

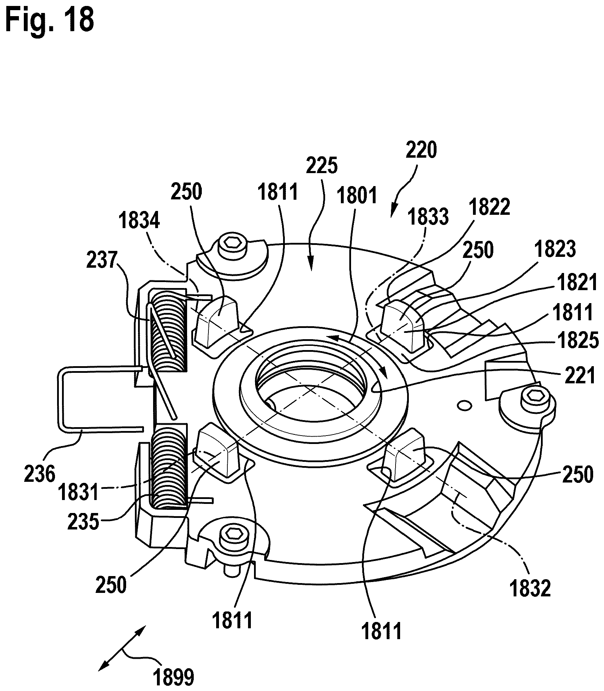

Fig. 18 zeigt die Grundplatte 220 von Fig. 2 von ihrer Seite 225 aus gesehen. Vorzugsweise ist das mindestens eine Kontaktelement 250 in einer zugeordneten Ausnehmung 1811 der gehäusefesten Grundplatte 220 angeordnet. Bevorzugt bildet das mindestens eine Kontaktelement 250 mit der Ausnehmung 1811 eine stoffschlüssige Verbindung aus, z.B. eine Klebverbindung. Alternativ ist das mindestens eine Kontaktelement 250 mittels Spritzpress-Verfahren oder Spritzguss-Verfahren in der Ausnehmung 1811 fixiert. Bevorzugt ist das mindestens eine Kontaktelement 250 entlang der gehäusefesten Grundplatte 250 zugeordneten Hauptachsen 1831, 1832, 1833, 1834 ausgerichtet. Vorzugsweise sind die Hauptachsen 1831, 1832, 1833, 1834 entlang einer radialen Richtung 1899 der Grundplatte 1899 ausgerichtet.

Das mindestens eine Kontaktelement 250 weist vorzugsweise einen quaderförmige Grundkörper 1821 mit abgerundeten Ecken 1822, 1823 auf. Bevorzugt ist der quaderförmige Grundkörper 1821 auf einem Bodenabschnitt 1825 angeordnet. Der Bodenabschnitt 1825 ist vorzugsweise in der Ausnehmung 1811 angeordnet, wobei der quaderförmige Grundkörper 1821 senkrecht auf dem Bodenabschnitt 1825 angeordnet ist. Darüber hinaus ist das mindestens eine Kontaktelement 250 in Umfangsrichtung 1801 der Grundplatte gebogen. Alternativ kann der Grundkörper 1821 auch eine beliebig andere Form aufweisen z.B. zylindrisch.

Fig. 19 zeigt die Trägerplatte 260 mit der Laserbaugruppe 200 und dem Gehäuse 210 von Fig. 3 und verdeutlicht die an der Oberseite 211 angeordneten, beispielhaften vier Ausnehmungen 215 mit den Kontaktflächen 242. Vorzugsweise ist jeder Ausnehmung 215 eine Kontaktfläche 242 zugeordnet. Vorzugsweise ist die Kontaktfläche 242 als Mäanderkontakt 1910 ausgebildet. Illustrativ weist die Kontaktfläche 242 einen Mäanderkontakt 1910 auf. Alternativ kann eine Kontaktfläche 242 auch mehrere Mäanderkontakte 1910 aufweisen.

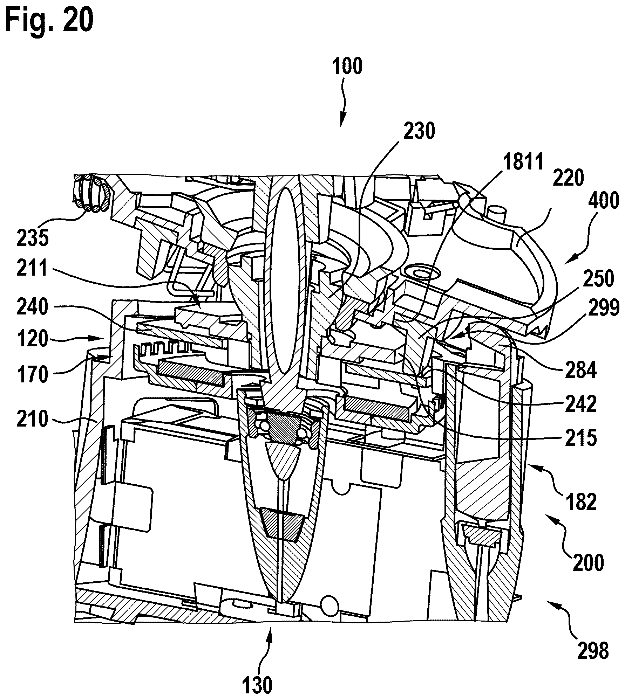

Fig. 20 zeigt den Rotationslaser 100 von Fig. 1 und Fig. 4 und verdeutlicht ein Berühren des illustrativ rechten Kontaktelements 250 der Grundplatte 220 auf der illustrativ rechten Kontaktfläche 242 der Steuerplatine 240 der Trägerplatte 260. Dabei zeigt Fig. 20 beispielhaft ein Durchgreifen des illustrativ rechten Kontaktelements 250 durch die Ausnehmung 215 der Oberseite 211 des Gehäuses 210.

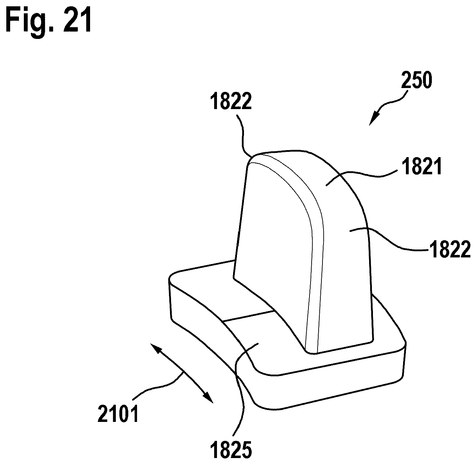

Fig. 21 zeigt das Kontaktelement 250 der Grundplatte 220 von Fig. 2, Fig. 4, Fig. 18 und Fig. 20 mit dem Bodenabschnitt 1825 sowie dem quaderförmigen Grundkörper 1821 mit den abgerundeten Ecken 1822, 1823. Bevorzugt ist das Kontaktelement 250 entlang seiner Längserstreckung 2101 gebogen ausgebildet.

## Patentansprüche

1. Rotationslaser (100) mit einem Gehäuse (110), in dem eine gehäusefeste Grundplatte (220) in einem vorgegebenen Abstand zu einer Trägerplatte (260) angeordnet ist, wobei die Trägerplatte (260) eine Laserbaugruppe (200) aufweist, wobei die Laserbaugruppe (200) zumindest eine Lasereinheit (130) zur Erzeugung eines Laserstrahls und eine Nivelliereinheit (180) mit mindestens einer Neigungseinstelleinheit (182) zum Einstellen eines Neigungswinkels (423) der Trägerplatte (260) relativ zur gehäusefesten Grundplatte (220) aufweist, und wobei eine Endanschlageinheit (299) mit mindestens einem Kontaktelement (250) vorgesehen ist, das dazu ausgebildet ist, die Neigungseinstelleinheit (182) bei Erreichen eines maximal möglichen Neigungswinkels (423) zu deaktivieren, **dadurch gekennzeichnet, dass** das mindestens eine Kontaktelement (250) elektrisch leitend ist.

2. Rotationslaser nach Anspruch 1, **dadurch gekennzeichnet, dass** bei einem Überlastfall zum Schutz der Laserbaugruppe (200) das mindestens eine Kontaktelement (250) elastisch verformbar ist.

3. Rotationslaser nach Anspruch 1 oder 2, **dadurch gekennzeichnet, dass** ein der Trägerplatte (260) zugeordnetes Gehäuse (210) an seiner Oberseite (211) eine dem mindestens einen Kontaktelement (250) zugeordnete Ausnehmung (215) aufweist zum teilweisen Durchdringen und Berühren einer einer Steuerplatine (240) zugeordneten Kontaktfläche (242), wodurch ein der mindestens einen Neigungseinstelleinheit (182) zugeordneter Motor (282) deaktivierbar ist.

4. Rotationslaser nach Anspruch 3, **dadurch gekennzeichnet, dass** die Kontaktfläche (242) als Mäanderkontakt (1910) ausgebildet ist.

5. Rotationslaser nach einem der vorhergehenden Ansprüche, **dadurch gekennzeichnet, dass** das mindestens eine Kontaktelement (250) verformbar und zumindest abschnittsweise elektrisch leitend ist.

6. Rotationslaser nach einem der vorhergehenden Ansprüche, **dadurch gekennzeichnet, dass** das mindestens eine Kontaktelement (250) einen quaderförmigen Grundkörper (1821) mit abgerundeten Ecken (1822, 1823) aufweist und/oder entlang seiner Längserstreckung (2101) gebogen ist.

7. Rotationslaser nach einem der vorhergehenden Ansprüche, **dadurch gekennzeichnet, dass** das mindestens eine Kontaktelement (250) in einer zugeordneten Ausnehmung (1811) der gehäusefesten Grundplatte (220) eingeklebt ist.

8. Rotationslaser nach einem der Ansprüche 1 bis 6, **dadurch gekennzeichnet, dass** das mindestens eine Kontaktelement (250) mittels Spritzpress-Verfahren oder Spritzguss-Verfahren an der gehäusefesten Grundplatte (220) angeordnet ist.

9. Rotationslaser nach einem der vorhergehenden Ansprüche, **dadurch gekennzeichnet, dass** das mindestens eine Kontaktelement (250) entlang der gehäusefesten Grundplatte (250) zugeordneten Hauptachsen (1831, 1832, 1833, 1834) ausgerichtet ist.

10. Rotationslaser nach einem der vorhergehenden Ansprüche, **dadurch gekennzeichnet, dass** zwei Neigungseinstelleinheiten (182) vorgesehen sind und vier Kontaktflächen (242) vorgesehen sind, wobei zwei Kontaktflächen (242) auf einer gemeinsamen radialen Achse (321, 322) mit jeweils einer Neigungseinstelleinheit (182) angeordnet sind, wobei die jeweilige Kontaktfläche (242) und die Neigungseinstelleinheit (182) in radialer Richtung (209) zueinander beabstandet angeordnet sind.

11. Rotationslaser nach einem der vorhergehenden Ansprüche, **dadurch gekennzeichnet, dass** ein der mindestens einen Neigungseinstelleinheit (182) zugeordneter Motor (282) derart ausgebildet ist, dass bei Erreichen eines maximal möglichen Neigungswinkels (423) eine Drehrichtung des zugeordneten Motors (282) zum Verkleinern des Neigungswinkels (423) änderbar ist.
